(19) Europäisches Patentamt
European Patent Office
Office européen des brevets

(11) Veröffentlichungsnummer: **0 648 792 A1**

# (12) EUROPÄISCHE PATENTANMELDUNG

(21) Anmeldenummer: **94116054.1**

(22) Anmeldetag: **12.10.94**

(51) Int. Cl.⁶: **C08G 18/38**, G02F 1/35, C09B 69/10

(30) Priorität: **19.10.93 DE 4335541**

(43) Veröffentlichungstag der Anmeldung: **19.04.95 Patentblatt 95/16**

(84) Benannte Vertragsstaaten: **CH DE FR GB LI NL**

(71) Anmelder: **BASF Aktiengesellschaft**
**Carl-Bosch-Strasse 38**
**D-67063 Ludwigshafen (DE)**

(72) Erfinder: **Beckmann, Stefan, Dr.**
**Seebacherstr. 8**
**D-67098 Bad Dürkheim (DE)**
Erfinder: **Etzbach, Karl-Heinz, Dr.**
**Jean-Ganss-Str. 46**
**D-67227 Frankenthal (DE)**
Erfinder: **Sens, Rüdiger, Dr.**
**Medicusstrasse 12**
**D-68165 Mannheim (DE)**
Erfinder: **Häberle, Karl, Dr.**
**Allerheiligenstrasse 15**
**D-67346 Speyer (DE)**

## (54) Azo- oder Stilbenfarbstoffgruppierungen und Urethangruppen enthaltendes Polyaddukt und dessen Verwendung in der nicht-linearen Optik.

(57) Die Erfindung betrifft Azo- oder Stilbenfarbstoffgruppierungen und Urethangruppen enthaltende Polyaddukte aus

(a) mindestens einem organischen Polyisocyanat,

(b) mindestens einer organischen Verbindung mit zwei gegenüber NCO reaktiven Gruppen, die ein mittleres Molekulargewicht $\overline{M}_n$ bis zu 500 g/Mol aufweist,

(c) mindestens einer von (b) verschiedenen organischen Verbindung mit Azo- oder Stilbenfarbstoffgruppierungen und mindestens zwei NCO-reaktiven Gruppen

sowie gegebenenfalls

(d) einer oder mehreren Polyhydroxyverbindungen mit mittleren Molekulargewichten $\overline{M}_n$ von über 500 bis zu 5000 g/mol,

wobei das Verhältnis der NCO-Gruppen in Komponente (a) zur Summe der NCO-reaktiven Gruppen in den Komponenten (b), (c) und (d) 2:1 bis 1:2 beträgt.

Diese Polyaddukte eignen sich für Anwendungen in der nichtlinearen Optik.

EP 0 648 792 A1

Die Erfindung betrifft Azo- oder Stilbenfarbstoffgruppierungen und Urethangruppen enthaltende Polyaddukte und deren Verwendung in der nicht-linearen Optik.

Polyurethane, die NLO-aktive Bausteine enthalten, sind bereits bekannt, z.B. aus EP-A 0 359 648, EP-A 363 237 oder EP-A 401 063.

In diesen Schriften werden Urethane beschrieben, die aus NLO-aktiven Diolen und Diisocyanaten erhalten werden. Auch die Verwendung von Triisocyanaten oder Polyolen wie wie N,N',N''-Tris-(hydroxyalkyl)hexahydrotriazin oder Pentaerythrit zur Herstellung vernetzter Polyurethane ist beschrieben.

In EP-A 0 359 648 wird auch die weniger bevorzugte Verwendung von Gemischen aus NLO-Diol mit anderen, nicht näher spezifizierten Diolen erwähnt. Diese Druckschrift gibt jedoch keinen Hinweis, daß durch die Verwendung von bestimmten Diol-Gemischen NLO-Polyurethanaddukte mit variabler Tg erhalten werden können.

In den oben angeführten Schriften ist die Glastemperatur der NLO-Polyurethane durch die Wahl des NLO-Diols und des Isocyanats festgelegt; eine Variation ist nicht möglich. Eine Variation der Tg kann nur erreicht werden, indem das NLO-PU auf dem Substrat nachträglich vernetzt wird. Dabei gehen aber andere, erwünschte Eigenschaften des Polyurethans verloren. Insbesondere sind vernetzte Polyurethane nicht mehr löslich, so daß ihre Handhabung sehr erschwert wird.

Aufgabe der vorliegenden Erfindung ist es, Produkte mit verbesserten Verarbeitungseigenschaften aufzuzeigen, die gute Filmbildungseigenschaften aufweisen und deren Glastemperatur $T_G$ über einen weiten Bereich einstellbar ist.

Überraschenderweise gelingt dies durch den Einsatz von Gemischen bestimmter Verbindungen mit NCO-reaktiven Gruppen, wobei eine dieser Verbindungen Azo- oder Stilbenfarbstoffgruppierungen enthält.

Gegenstand der vorliegenden Erfindung sind Azo- oder Stilbenfarbstoffgruppierungen und Urethangruppen enthaltende Polyaddukte aus

(a) mindestens einem organischen Polyisocyanat,

(b) mindestens einer Verbindung mit zwei gegenüber NCO reaktiven Gruppen, die ein mittleres Molekulargewicht $\overline{M}_n$ mit bis zu 500 g/Mol aufweist,

(c) mindestens einer von (b) verschiedenen organischen Verbindung mit Azo- oder Stilbenfarbstoffgruppierungen und mindestens zwei NCO-reaktiven Gruppen

sowie gegebenenfalls

(d) einer oder mehrerer Polyhydroxyverbindungen mit mittleren Molekulargewichten $\overline{M}_n$ von über 500 bis zu 5000 g/mol,

mit der Maßgabe, daß auf ein Grammäquivalent NCO der Komponente (a) 0,05 bis 0,9 Grammäquivalente NCO-reaktiver Gruppen der Komponente (b), 0,1 bis 0,95 Grammäquivalente NCO-reaktiver Gruppen der Komponente (c) und 0 bis 0,5 Grammäquivalente Hydroxylgruppen der Komponente (d), wobei das Verhältnis der NCO-Gruppen in Komponente (a) zur Summe der NCO-reaktiven Gruppen in den Komponenten (b), (c) und (d) 2:1 bis 1:2 beträgt, eingesetzt werden.

Gegenstand der vorliegenden Erfindung ist auch die Verwendung der erfindungsgemäßen Polyaddukte in der nicht-linearen Optik, insbesondere in Bauelementen der Nachrichtentechnik.

Mit den erfindungsgemäßen Azo- oder Stilbenfarbstoffgruppierungen und Urethangruppen enthaltenden Polyaddukten gelingt es, wesentliche Verbesserungen in den Verarbeitungseigenschaften zu erzielen.

Zum einen zeigen die erfindungsgemäßen Polyaddukte gute nicht-linear optische Werte, zum anderen ist eine gute Schichtbildung mit geringeren optischen Verlusten bei der Lichtführung möglich.

Insbesondere ist hierbei die Eignung der erfindungsgemäßen Polyaddukte in der Nachrichtentechnik, in optischen Modulatoren (z.B. Mach-Zehnder-Interferometer), in optischen Schaltern, bei der Frequenzmischung oder in Wellenleitern hervorzuheben.

Ein besonderer Vorteil der erfindungsgemäßen Addukte ist, daß sich deren Glastemperatur $T_G$ über einen weiten Bereich einstellen läßt.

Zu den Aufbaukomponenten der erfindungsgemäßen Polyaddukte und bezüglich ihrer Verwendung ist im einzelnen folgendes auszuführen.

Sowohl die Herstellung der erfindungsgemäßen Polyaddukte als auch die der ihnen zugrundeliegenden Chromophore kann nach üblichen und bekannten Methoden der organischen Chemie erfolgen, wie sie beispielsweise in March, "Advanced Organic Chemistry" bzw. in "Organicum", 16. Auflage, bzw. in "Kunststoff-Handbuch", Band 7, "Polyurethane", Carl Hanser-Verlag München-Wien, 2. Auflage, 1983 beschrieben sind.

Die Herstellung der als Ausgangsmaterialien für die Polyaddukte einzusetzenden monomeren Azo- und Stilbenfarbstoffe kann beispielsweise durch Umsetzung entsprechend substituierter Aminogruppen tragender Verbindungen in stark saurem Medium mit Nitrosylschwefelsäure erfolgen. Die so erhaltenen Diazoniumsalzlösungen lassen sich dann z.B. mit N,N-Bis(hydroxyalkyl)anilin oder entsprechenden Anilinderivaten mit anderen NCO-reaktiven Gruppen, wie z.B. NH-Gruppen in stark saurem Medium (conc. Schwefelsäure + Amidoschwefelsäure) umsetzen (möglichst bei Temperaturen von < 5°C), durch Zugabe von Alkalilauge isolieren und auf übliche Weise (beispielsweise durch Umkristallisieren) reinigen. Die so erhältlichen Bishydroxyverbindungen bzw. entsprechenden Verbindungen mit anderen NCO-reaktiven Gruppen lassen sich dann beispielsweise zusammen mit Komponente (b) und gegebenenfalls (d) durch Umsetzung mit organischem Polyisocyanat (a) in die erfindungsgemäßen Polyaddukte überführen und auf übliche Weise (beispielsweise durch Umfällen) reinigen.

Die erfindungsgemäßen Polyaddukte weisen im allgemeinen mittlere Molekulargewichte $\overline{M}_n$ zwischen 500 und 500 000 auf.

Geeignete Polyisocyanate (a) zum Aufbau der erfindungsgemäßen Polyaddukte sind z.B. Diisocyanate der allgemeinen Formel $X(NCO)_2$, wobei X einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger Diisocyanate sind Tetramethylendiisocyanat, Hexamethylendiisocyanat, Dodecamethylendiisocyanat, 1,4-Diisocyanato-cyclohexan, 1-Isocyanato-3,5,5-trimethyl-5-isocyanatomethylcyclohexan (IPDI), 4,4'-Diisocyanato-dicyclohexylmethan (HMDI), 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,4'-MDI, p-Xylylendiisocyanat, m- und p-Tetramethylxylylendiisocyanat sowie aus diesen Verbindungen bestehende Gemische.

Es ist auch möglich, die in der Polyurethanchemie an sich bekannten höherfunktionellen Polyisocyanate oder auch an sich bekannte modifizierte, beispielsweise Carbodiimid-, Allophanat-, Isocyanurat-, Urethan- und/oder Biuretgruppen aufweisende Polyisocyanate anteilig mitzuverwenden.

Als Verbindungen (b) mit mindestens zwei gegenüber Isocyanat reaktiven Gruppen und einem mittleren Molekulargewicht $\overline{M}_n$ bis zu 500 g/mol eignen sich z.B. die entsprechenden, unter (d) aufgeführten, zur Herstellung der Polyesterdiole geeigneten Diole, Aminoalkohole wie Ethanolamin, Isopropanolamin, Methylethanolamin, Diaminopropane, Diaminobutane, Diaminohexane, Piperazin, 2,5-Dimethylpiperazin, 1-Amino-3-Aminomethyl-3,5,5-trimethylcyclohexan, Isophorondiamin (IPDA), 4,4'-Diaminodicyclohexylmethan, 1,4-Diaminocyclohexan, Hydrazin oder Hydrazinhydrat; auch Wasser ist hierfür geeignet.

Bevorzugt werden als Komponente (b) lineare, 1,Ω-Dihydroxyalkane wie Ethandiol-(1,2), Butandiol-(1,4), Pentandiol-(1,5), Hexandiol-(1,6) oder ethergruppenhaltige Alkohole wie z.B. Diethylenglykol verwendet.

Auf ein Grammäquivalent NCO der Komponente (a) werden 0,05 bis 0,9 Grammäquivalent NCO-reaktiver Gruppen aus Verbindungen mit mindestens zwei gegenüber Isocyanat reaktiven Gruppen verwendet, bevorzugt 0,2 bis 0,8 Grammäquivalent.

Bei Komponente (c) handelt es sich im allgemeinen um Diole oder zwei andere NCO-reaktive Gruppen tragende Derivate von Azo- oder Stilbenfarbstoffen.

Beispiele für Azo- und Stilbenfarbstoffgruppierungen enthaltende Diole (c) sind

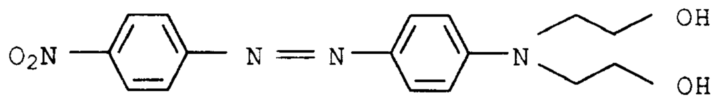

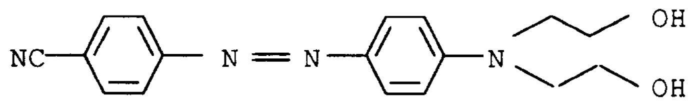

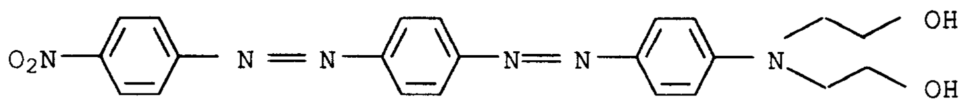

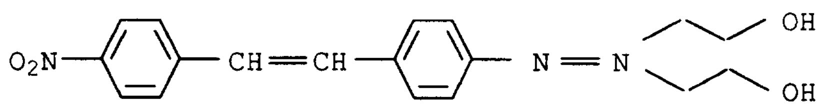

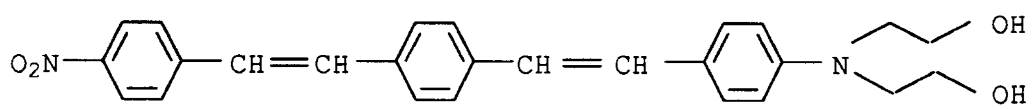

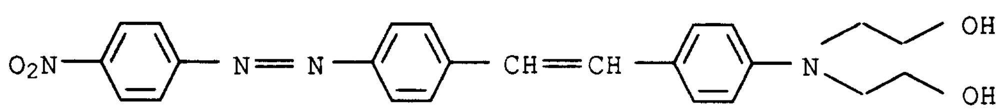

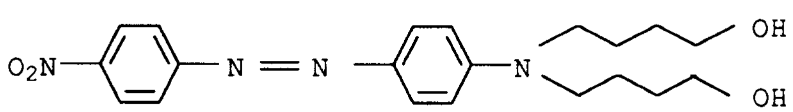

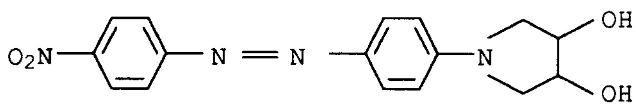

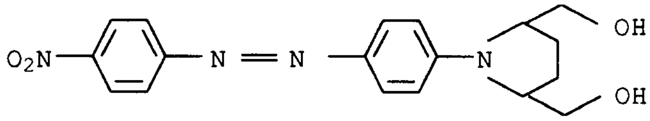

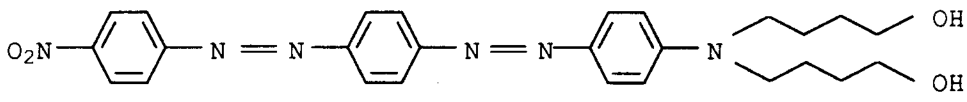

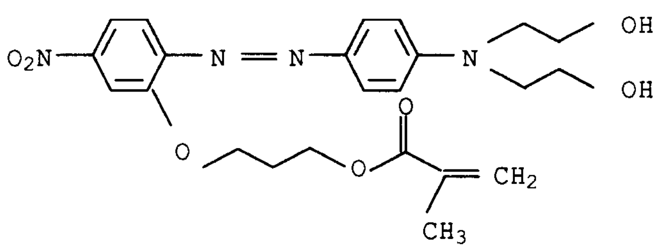

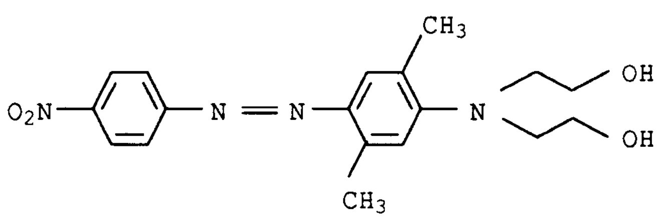

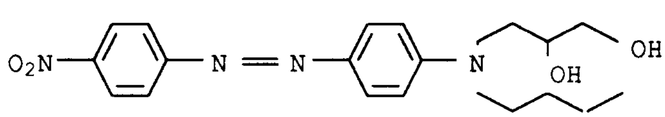

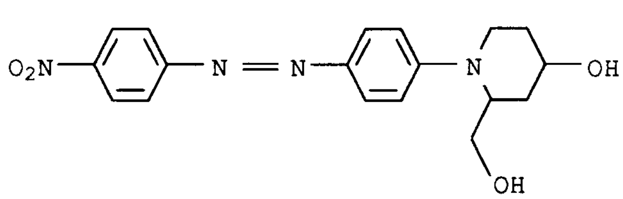

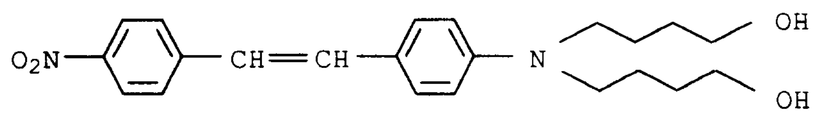

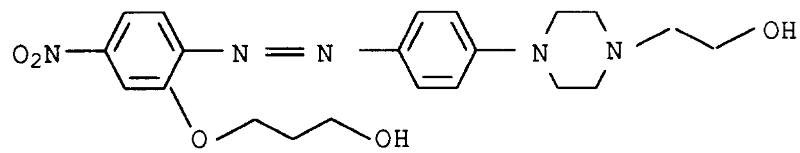

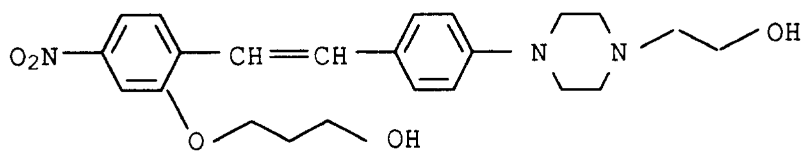

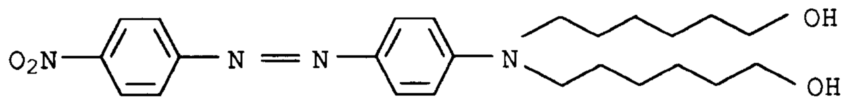

Bei Komponente (d) handelt es sich um Polyhydroxylverbindungen des Molekulargewichtsbereiches zwischen 500 und 5000 g/mol, bevorzugt 600 bis 4000 g/mol. Als solche eignen sich insbesondere die an sich bekannten Polyester- und Polyetherole.

Geeignete Polyesterole sind Umsetzungsprodukte von mehrwertigen, vorzugsweise zweiwertigen, und gegebenenfalls zusätzlich dreiwertigen, mit mehrwertigen, vorzugsweise zweiwertigen Carbonsäuren. Anstelle der freien Carbonsäuren können auch die entsprechenden Carbonsäureanhydride oder entsprechende Carbonsäureester von niederen Alkoholen oder deren Gemische zur Herstellung der Polyesterdiole verwendet werden. Als Beispiele für mehrwertige Carbonsäuren seien genannt:
Bernsteinsäure, Glutarsäure, Adipinsäure, Korksäure, Azelainsäure, Sebacinsäure, Tetrahydrophthalsäure, Hexahydrophthalsäure, Endomethylentetrahydrophthalsäure, Maleinsäure, Fumarsäure, dimere Fettsäuren, Phthalsäure, Isophthalsäure, Terephthalsäure, Tetrachlorphthalsäure, die isomeren Pyridindicarbonsäuren und - soweit existent - deren Anhydride.

Als mehrwertige Alkohole kommen z.B. Ethandiol, Propandiol-(1,2) und -(1,3), Butandiol-(1,4), -(1,3) und -(2,3), Butendiol-(1,4), Butindiol-(1,4), die isomeren Pentan-, Hexan- und Octandiole, Neopentylglykol, 1,4-Bis-Hydroxymethylcyclohexan, 2-Methyl-1,3-propandiol, Hydrochinon-bis-(hydroxyethylether), alkoxyliertes Bisphenol A, ferner Di-, Tri-, Tetra- und Polyethylenglykol, Di- und Polypropylenglykol, Dibutylenglykol und Polybutylenglykole in Frage. In geringen, d.h. 10 mol-% nicht übersteigenden Anteilen, können auch höher als difunktionelle Alkohole, wie z.B. Glycerin, Trimethylolpropan, Trimethylolethan oder Hexantriol-(1,2,6), mitverwendet werden.

Auch Polyetherole auf Basis von Epoxiden von Ethen, Propen, Buten oder Styrol sowie Polytetrahydrofuran können verwendet werden.

Es können 0 bis 0,5, bevorzugt 0 bis 0,2 Grammäquivalent OH aus Polyhydroxylverbindungen (d) mitverwendet werden; besonders bevorzugt werden keine Polyhydroxylverbindungen (d) mit einem Molgewicht über 500 bis 5000 g/mol mitverwendet.

Weitere Beispiele von bei der Herstellung der erfindungsgemäßen Polyurethane als Komponenten (a), (b) und (d) einsetzbaren Verbindungen sind z.B. in High Polymers, Vol. XVI, "Polyurethanes, Chemistry and Technology", von Saunders-Frisch, Interscience Publishers, New York, London, Band I, 1962, beschrieben.

Das Verhältnis der NCO-Gruppen in Komponente (a) zur Summe der NCO-reaktiven Gruppen in den Komponenten (b), (c) und (d) soll 2:1 bis 1:2, vorzugsweise 1,5:1 bis 1:1,5, insbesondere 1:1 betragen.

Gegebenenfalls im Polyaddukt noch vorhandene freie NCO-Gruppen können, falls gewünscht, mit einfachen Alkoholen, wie z.B. Methanol, Ethanol, Amin, Ammoniak oder Wasser umgesetzt werden.

Die Herstellung der erfindungsgemäßen urethangruppenhaltigen Polyaddukte kann nach den üblichen Methoden erfolgen.

Bevorzugt wird die Herstellung in gegenüber Isocyanat inerten Lösungsmitteln wie Kohlenwasserstoffen, Ketonen, Ethern, Estern oder Amiden durchgeführt, wobei die Reaktionstemperatur bei 50 bis 200 °C, vorzugsweise bei 60 bis 150 °C liegen kann.

Zur Beschleunigung der Reaktion können die üblichen Katalysatoren, wie Dibutylzinndilaurat, Zinn-II-octoat oder Diazobicyclo-(2,2,2)-octan, mitverwendet werden.

Die Herstellung von Schichten, die die erfindungsgemäßen Polyaddukte enthalten, erfolgt in an sich bekannter Weise, z.B. durch Naßbeschichtung (Spin coating) mit einer 5 - 15 %igen Lösung des Polyaddukts in einem Lösungsmittel (z.B. Tetrachlorethan, Methylenchlorid, Tetrahydrofuran).

Geeignete Substrate sind dabei z.B. Indium-Zinn-Oxid (= ITO) u.a. Bei geeignetem Substitutionsmuster (z.B. Epoxystruktur) können die Polyaddukte auch photochemisch, thermisch oder durch die Einwirkung von Elektronenstrahlen vernetzt werden.

Die neuen Polyaddukte zeichnen sich durch gute Verarbeitbarkeit zu dünnen Schichten, hohe Reinheit, enge Molekulargewichtsverteilung, gute Orientierung im elektrischen Feld, gute Langzeitstabilität und gute elektrooptische Koeffizienten aus.

Die in den Beispielen genannten Teile und Prozente sind, soweit nicht anders angegeben, Gewichtsteile bzw. Gewichtsprozente.

I. Herstellung von Komponente (c) (Azo- bzw. Stilbenfarbstoffe)

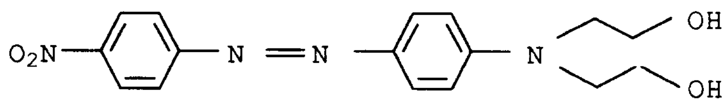

1,38 g (0,01 mol) p-Nitroanilin wurden in 50 g 85 %iger Schwefelsäure aufgerührt. Anschließend wurden 3 g Nitrosylschwefelsäure bei 0 bis + 5 °C zugetropft. Nach dreistündigem Rühren wurde die entstandene Diazoniumlösung zu 2,09 g (0,01 mol) N,N-Bis(Hydroxyethyl)anilin in 150 g Eiswasser und 10 g konz. Schwefelsäure und 0,8 g Amidoschwefelsäure bei einer Temperatur < 0,5 °C und einem pH-Wert von 1 bis 1,5 zugetropft. Der pH-Wert wurde durch Zugabe von 20 gew.-%iger Natronlauge bei 1 bis 1,5 gehalten. Nach Rühren über Nacht bei Raumtemperatur wurde der ausgefallene Farbstoff abgesaugt, gewaschen und getrocknet.
Ausbeute = 2,1 g

| $C_{16}H_{18}N_4O_4$ (330) | | | | |
|---|---|---|---|---|
| ber = | C 58.18 | A 5.50 | N 16.96 | O 19.39 |
| gef = | C 57.94 | A 5.48 | N 17.02 | O 19.56 |

II. Herstellung von Azo- oder Stilbenfarbstoffgruppierungen und Urethangruppen enthaltender Polyaddukte

Vergleichsbeispiel

In einem Einhalskolben wurden 0,670 g (3 mmol) Isophorondiisocyanat (IPDI), 200 g Toluol und 0,1 g Dibutylzinndilaurat vorgelegt. Ein Soxhlet-Extraktor wurde mit 0,990 g (3 mmol) der unter I. beschriebenen Farbstoffkomponente (c) beschickt, und es wurde solange mit siedendem Toluol extrahiert, bis aller Farbstoff in den Kolben überführt wurde. Dann wurde das Toluol im Vakuum abgezogen, mit 50 g Methanol aufgekocht und aufgearbeitet.

Zur Aufarbeitung wurden die Polyaddukte jeweils mehrfach aus Tetrahydrofuran/Methanol umgefällt, anschließend im Hochvakuum getrocknet und die Glastemperatur $T_G$ bestimmt.
$T_G$: 78 °C

Beispiel 1

In einem Einhalskolben wurden 1,33 g (6 mmol) IPDI, 200 g Toluol und 0,1 g Dibutylzinndilaurat vorgelegt. Ein Soxhlet-Extraktor wurde mit 0,99 g (3 mmol) der unter I. beschriebenen Farbstoffkomponente (c) und 0,31 g (3 mmol) Pentandiol-1,5 beschickt, und es wurde solange mit siedendem Toluol extrahiert, bis aller Farbstoff in den Kolben überführt war. Dann wurde das Toluol im Vakuum abgezogen, mit 50 g Methanol aufgekocht und wie oben beschrieben aufgearbeitet.
$T_G$: 68 °C

Beispiel 2

In einem Einhalskolben wurden 2,00 g (9 mmol) IPDI, 200 g Toluol und 0,1 g Dibutylzinndilaurat vorgelegt. Ein Soxhlet-Extraktor wurde mit 0,99 g (3 mmol) der unter I. beschriebenen Farbstoffkomponente (c) und 0,62 g (6 mmol) Pentandiol-1,5 beschickt, und es wurde solange mit siedendem Toluol extrahiert, bis aller Farbstoff in den Kolben überführt war. Dann wurde das Toluol im Vakuum abgezogen, mit 50 g Methanol aufgekocht und wie oben beschrieben aufgearbeitet.
$T_G$: 73 °C

Beispiel 3

In einem Einhalskolben wurden 2,00 g (9 mmol) IPDI, 200 g Toluol und 0,1 g Dibutylzinndilaurat vorgelegt. Ein Soxhlet-Extraktor wurde mit 0,99 g (3 mmol) der unter I. beschriebenen Farbstoffkomponente (c) und 0,54 g (6 mmol) Butandiol-1,4 beschickt, und es wurde solange mit siedendem Toluol extrahiert, bis aller Farbstoff in den Kolben überführt war. Dann wurde das Toluol im Vakuum abgezogen, mit 50 g Methanol aufgekocht und wie oben beschrieben aufgearbeitet.
$T_G$: 87 °C

Beispiel 4

In einem Einhalskolben wurden 0,70 g (4 mmol) Toluylendiisocyanat (80 % 1,4-Isomer, 20 % 2,6-Isomer) und 200 g Toluol vorgelegt. Ein Soxhlet-Extraktor wurde mit 0,66 g (2 mmol) der unter I. beschriebenen Farbstoffkomponente (c) und 0,21 g (2 mmol) Pentandiol-1,5 beschickt, und es wurde solange mit siedendem Toluol extrahiert, bis aller Farbstoff in den Kolben überführt war. Dann wurde das Toluol im Vakuum abgezogen, mit 50 g Methanol aufgekocht und wie oben beschrieben aufgearbeitet.
$T_G$: 82 °C

Die erfindungsgemäßen Addukte lassen sich gut, beispielsweise durch Spin-Coating, zu dünnen Schichten von z.B. 2 bis 20 µm verarbeiten und im Bereich ihrer Glastemperatur durch Anlegen eines elektrischen Feldes von etwa 50 bis 200 V/cm polen.

Die so gepolten Materialien zeigen gute nicht linear optische Eigenschaften, z.B. elektrooptische Koeffizienten von ca. 5 bis 20 V/pm.

Die Molekulargewichte der erfindungsgemäßen Polyaddukte lassen sich in relativ weiten Grenzen, beispielsweise zwischen 5000 und 500.000, nach üblichen Methoden einstellen.

**Patentansprüche**

**1.** Azo- oder Stilbenfarbstoffgruppierungen und Urethangruppen enthaltendes Polyaddukt aus
(a) mindestens einem organischen Polyisocyanat,
(b) mindestens einer organischen Verbindung mit zwei gegenüber NCO reaktiven Gruppen, die ein mittleres Molekulargewicht $\overline{M}_n$ bis zu 500 g/Mol aufweist,
(c) mindestens einer von (b) verschiedenen organischen Verbindung mit Azo- oder Stilbenfarbstoffgruppierungen und mindestens zwei NCO-reaktiven Gruppen
sowie gegebenenfalls
(d) einer oder mehreren Polyhydroxyverbindungen mit mittleren Molekulargewichten $\overline{M}_n$ von über 500 bis zu 5000 g/mol,
mit der Maßgabe, daß auf ein Grammäquivalent NCO der Komponente (a) 0,05 bis 0,9 Grammäquivalente NCO-reaktiver Gruppen der Komponente (b), 0,1 bis 0,95 Grammäquivalente NCO-reaktiver Gruppen der Komponente (c) und 0 bis 0,5 Grammäquivalente Hydroxylgruppen der Komponente (d), wobei das Verhältnis der NCO-Gruppen in Komponente (a) zur Summe der NCO-reaktiven Gruppen in

den Komponenten (b), (c) und (d) 2:1 bis 1:2 beträgt, eingesetzt werden.

**2.** Verwendung der Polyaddukte nach Anspruch 1 in der nicht-linearen Optik.

**3.** Verwendung der Polyaddukte nach Anspruch 1 in Bauelementen der Nachrichtentechnik.

Europäisches Patentamt

# EUROPÄISCHER RECHERCHENBERICHT

Nummer der Anmeldung

EP 94116054.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.6) |
|---|---|---|---|
| D,A | EP - A - 0 401 063 (RHONE-POULENC CHIMIE) * Ansprüche; Seite 9, Zeile 37 - Seite 11, Zeile 55 * -- | 1-3 | C 08 G 18/38<br>G 02 F 1/35<br>C 09 B 69/10 |
| D,A | EP - A - 0 363 237 (RHONE-POULENC CHIMIE) * Ansprüche * -- | 1-3 | |
| A | US - A - 5 194 463 (KRUTAK et al.) * Ansprüche 1,2,12,14,33 * ---- | 1 | |

RECHERCHIERTE SACHGEBIETE (Int. Cl.6)

C 08 G
G 02 F
C 09 B

Der vorliegende Recherchenbericht wurde für alle Patentansprüche erstellt.

| Recherchenort | Abschlußdatum der Recherche | Prüfer |
|---|---|---|
| WIEN | 01-12-1994 | HAUSWIRTH |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument